# EUROPEAN PATENT SPECIFICATION

(11) **EP 3 631 388 B1**
(45) Date of publication and mention of the grant of the patent: **21.12.2022**
(21) Application number: 18737343.6
(22) Date of filing: 22.05.2018
(51) Int. Cl.: G01H 1/00, G01H 3/00, G01M 13/02

(54) **A VEHICLE NOISE, VIBRATION AND HARSHNESS (NVH) TESTING METHOD AND SYSTEM**
VERFAHREN UND SYSTEM ZUR GERÄUSCH-, VIBRATIONS- UND RAUHEITS (NVH)-PRÜFUNG EINES FAHRZEUGS
PROCÉDÉ ET SYSTÈME DE TEST DE BRUIT, DE VIBRATIONS ET DE SECOUSSES (NVH) D'UN VÉHICULE

(30) Priority: 26.05.2017 GB 201708467
(43) Date of publication of application: 08.04.2020
(73) Proprietor: Microface Ltd, Newburgh, Lancashire WN8 7NB (GB)
(72) Inventor: SLEVIN, Edward, Newburgh, Lancashire WN8 7NB (GB)
(74) Representative: Forresters IP LLP
(86) International application number: PCT/GB2018/051378
(87) International publication number: WO 2018/215749

(56) References cited:
- WO-A1-2016/089238
- US-A1- 2003 088 346
- US-A1- 2013 096 855
- US-A1- 2017 003 197
- Ieee Standards Board: "IEEE Standard for Digitizing Waveform Recorders", IEEE Std, 14 June 1994 (1994-06-14), XP055516136, DOI: 10.1109/IEEESTD.1994.122649 Retrieved from the Internet: URL:https://ieeexplore.ieee.org/stampPDF/g etPDF.jsp?tp=&arnumber=469117 [retrieved on 2018-10-17]
- Bart Selman ET AL: "Hill-climbing Search", Encyclopedia of Cognitive Science : Nadel/Cognitive, 1 January 2006 (2006-01-01), XP055516176, Chichester DOI: 10.1002/0470018860.s00015 ISBN: 978-0-470-01886-6 Retrieved from the Internet: URL:https://pdfs.semanticscholar.org/1a92/ 3ea72b8103518fc398ea17c01934e3fc146f.pdf [retrieved on 2018-10-17]

## Description

The present invention relates to a vehicle noise, vibration and harshness (NVH) testing method and system. The present invention more particularly relates to an NVH testing method and system for evaluating vehicle braking noise.

The Society of Automotive Engineers is an international organisation for the automotive industries. One of its main tasks is to develop standards for the testing and use of road vehicles. One of its main fields of endeavour is to develop standards for the environmental characteristics for road vehicles. An increasing important aspect of their work is in dealing with standards for noise pollution. The SAE J2521 standard has been developed to quantify the acceptability of the noise from passenger car brakes.

At first, it was considered adequate to measure the sound level with a standard noise meter. This can be performed to various readily accepted standards.

Unfortunately, all these standards are based on the presumption that a noise of short duration is less of a problem than a longer duration noise. This is not the case for brakes for which any noise can be subjectively unacceptable even if very short.

Also, brake noise may only be a problem at one particular speed, brake temperature, pressure, angle of the road or some other parameter such as humidity, making the process of screening new brakes for all situations very time consuming.

To overcome these problems, it has been proposed to exercise vehicle brakes with as many combinations as humanly possible (called a matrix) so a dynamometer test was devised to subject the brake to all the likely combinations of the above parameters. To prevent the test taking many days, the speed with which testing at any parameter is usually set as high as possible.

Since maintaining a resonance condition for an insufficient length of time does not allow a sound to build up, in a conventional NVH testing method the time lapse for each measurement is typically set to approximately 40 milliseconds. This allows sufficient time for a noise event to resonate but still allows testing in under a couple of days.

During each 40-millisecond period, the frequency and amplitude of the resulting resonant vibration must be recorded. This takes approximately 2000 samples at 44.1kHz sampling rate. Note that this is approximately 2000 and can be for instance 1800 or 2048 to ease calculations. Whatever number is used this is referred to hereinafter as the 2000-point event or sound bite.

44.1kHz was chosen by the standards it was an adequately low industrial standard giving frequency sampling just above that perceivable by the human ear. To minimise calculating time a fast Fourier transform (FFT) approach has been suggested but not mandated.

All manufacturers to date use an FFT or similar which puts the 40-millisecond sound sample into frequency domains in discrete buckets. These buckets are approximately 22Hz apart.

In other words, from the measurement in the bucket the amplitude is provided and one must assume the signal is in say the centre of the bucket, making frequency measurement only accurate to the nearest bucket i.e. ±11Hz approximately.

This is of little consequence as at the typical frequencies of these noise events in the range of say 700Hz to 10kHz. This error is not significant in terms of noise pollution to most people.

However, the amplitude measurement is also inaccurate as the buckets themselves do not have a flat frequency response.

Theoretically, if a noise event happens to be in the centre of a bucket it will be approximately measured as being 3dBs higher in amplitude than one on the cusp between two buckets.

The simplified explanation for this is that a signal on the cusp will fall in two buckets and half the power will be allocated to each bucket. i.e. each 3dB lower than the actual signal.

This is not strictly accurate because in practice weighting and other processing activities demanded in the standard distort this number meaning the loss value is nearer 2dBs.

All present machines therefore report the results noise event to an accuracy of approximately ±11Hz and an amplitude accuracy of ±2dBs. The accuracy of ±2dB is stated because during calibration of the equipment, it is not possible to know whereabouts inside the bucket the calibration tone (usually 1kHz at 94dB) lies so that there is a total uncertainty in the measurement over a range of 4dBs.

Some discerning studies have noticed this calibration error and allow for it.
It is accepted within the industry and implemented in all commercial machines, presently, that the FFT value is reported and so the frequency and amplitude error is accepted.

It is generally considered that the weakness lies in the short 2000-point sample which precludes the measurement of frequency and amplitude any more accurately. In fact, it is often said that it's the Nyquist sampling limit. The smaller the time sample the less accurate the frequency and amplitude measurement.

The Mandated sample size is convenient as it is just better than human perception. In fact, although the actual reason for the choice of sample size is lost this was probably as valid a reason as any.

However, the machines for evaluation of noise, vibration and harshness (NVH) are needed increasingly for evaluations of shims and other parts for brake assemblies. The brake itself may need several slight modifications to achieve a NVH improvement.

The normal technique to accomplish this with many variables would be a hill climbing technique of optimisations. It could take 4 or more modifications, each producing less than 1 dB to achieve a perceptible improvement but if the test equipment can misinterpret a frequency change of 12 Hz which would have no effect on the perceived noise with an amplitude change of 2.4dBs, the hill climbing technique fails every time. It is of course very easy to make a change to the resonant frequency of a noise event as virtually any mechanical change can do this but more difficult to reduce its amplitude. If you spend all your time misinterpreting frequency changes as an improvement in the amplitude of the noise you will waste a great amount of time and this is happening regularly at this time.

You could easily be improving matters but the equipment would report that you had made matters worse and you would not be able to distinguish by ear. What is needed is a method of more accurately measuring the frequency and amplitude of the short noise event so more subtle changes can be identified.

US-A-2003/0088346 discloses a conventional noise, vibration and harshness analyser. WO 2016/089238 discloses a method for monitoring a rotating device based on an analysis of a spectrum of a vibration signal.

There is a need for a method and system for measuring vehicle braking noise which does not suffer from the measurement inaccuracy described above.

The present invention seeks to provide an improved vehicle noise, vibration and harshness (NVH) testing method and system.

According to one aspect of the present invention, there is provided a vehicle noise, vibration and harshness (NVH) testing method as defined in claim 1 hereinafter. According to another aspect of the present invention, there is provided a tangible computer readable medium storing instructions which, when executed by a processor, cause the processor to perform the method of any one of claims 1-5 hereinafter.

According to another aspect of the present invention, there is provided a vehicle noise, vibration and harshness (NVH) testing method, the method comprising: spinning a vehicle wheel; and using a microphone and a noise sampling unit to sample the frequency and amplitude of noise emanating from the spinning wheel; and performing the method of any one of claims 1-5 hereinafter to measure the amplitude and frequency of a noise event in order to evaluate the noise, vibration and harshness of the noise emanating from the spinning wheel.

According to another aspect of the present invention, there is provided a vehicle noise, vibration and harshness (NVH) testing system as defined in claim 8 hereinafter.

So that the present invention may be more readily understood, embodiments of the present invention will now be described, by way of example, with reference to the accompanying drawings, in which:
Figure 1 is a graph showing the response of an FFT algorithm to a sine wave,
Figure 2 is a graph showing a 1010 Hz waveform and a 1000 Hz waveform, and
Figure 3 is a table comparing the results of an embodiment of the invention with the results of a conventional NVH testing method.

All conventional NVH testing systems which operate under the J2521 standard work by segmenting sound bites in the region of 45 milliseconds. These are digitised according to the specification at 44.1 KHz. These are then converted to the frequency domain with an FFT algorithm typically.

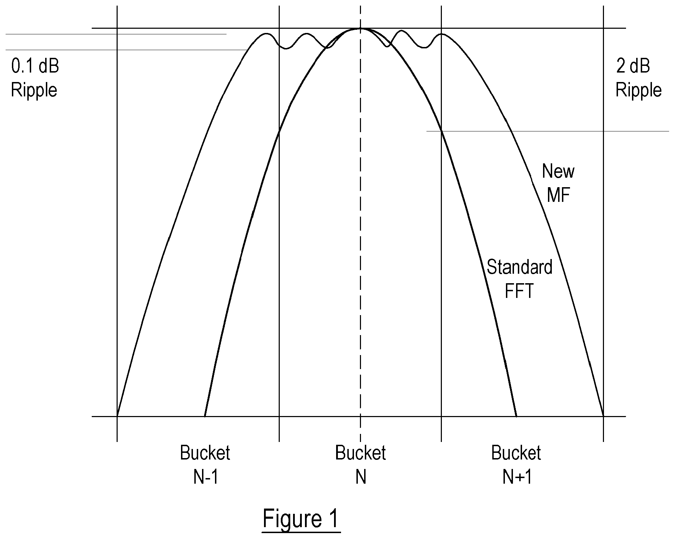

This produces buckets of results with a bucket width of about 22 Hz. Unfortunately, the frequency response of each bucket is not flat with an FFT amplitude drop of around 3 dBs on the cusp between two buckets. See Fig 1 of the accompanying drawings which depicts the response of an FFT algorithm to a sine wave.

The simplest explanation to this is that when on the cusp between two buckets, some of the energy drops in one bucket and some in the other, making, in theory, a 3dB drop in level for half the power in each bucket. The FFT process itself represents a time varying waveform as say 1000 sine waves in an arithmetical progression of varying amplitude and phase. Unfortunately the frequency of the tones produced by the brake do not fall neatly in line with the 1000 frequencies the representation uses. If for example the brake tone is at 1010 Hz and the column lines fall at 1000 Hz and 1022 Hz.

So the representation does its best with the nearest one say 1000 Hz and drops some of the remaining energy in the 1022 Hz bucket. In practice, the drop is not as high as this and is typically 2.5 dB due to windowing and other effects.

You will note that the new response proposed here does not fall off so rapidly in adjacent buckets. This not a problem as the original FFT is sufficiently accurate enough to suppress the side lobes and the correct answer lies in the bucket with the highest response in the FFT algorithm. Hence the standard FFT still has some use in directing the investigation to the best bucket quickly and this can then be followed up with a more accurate measurement.

An additional problem occurs with calibration. Most people are unaware of the exact relationship of the frequency of the calibration tone (usually 1000 Hz) to the frequency of the nearest bucket which will rarely, if ever, map directly on to 1000Hz. This means that you are not aware of the degree to which the calibration tone is misrepresented. This doubles the measurement uncertainty and now we are dealing with an error which is easily detected by the human ear.

The method of some embodiments proceeds by calculating the correct amplitude for the bucket and then deducing the correct frequency from that amplitude or via the other way round, using a set frequency. A combination of both approaches is also possible. This improves both the measurement and the calibration results, yielding over a 10-to-1 difference.

We are dealing with a time varying waveform of about 2000 samples to give us a spectrum of better than 25 Hz as required by the current specification.

We know that the FFT is only ±2.5 dBs in error and we are only looking for significant events of over, say 70 dBA, so anything reported lower than 65 dBA can be safely ignored.

This reduces the data set by over 99% making detailed investigation easier.
If we take one of these events, we can afford to analyse it in much more detail. Let's say for the sake of simplicity that we have a reported signal in the bucket which covers the frequency range between 1000 and 1020 Hz. We know that somewhere on this bucket lies a noise event for which we need to determine the amplitude accurately.

Any modern system will have a lossless copy of the tone recorded (e.g. a Microsoft PCM WAV file).

We can use a hill climbing technique to try a number of frequencies and amplitudes and phases. Homing in on the exact frequency, amplitude and phase which, when subtracted from the time varying waveform, produces the lowest absolute RMS error resulting in a precise frequency and amplitude measurement and significantly improving on the approximate amplitude and frequency given by the FFT .

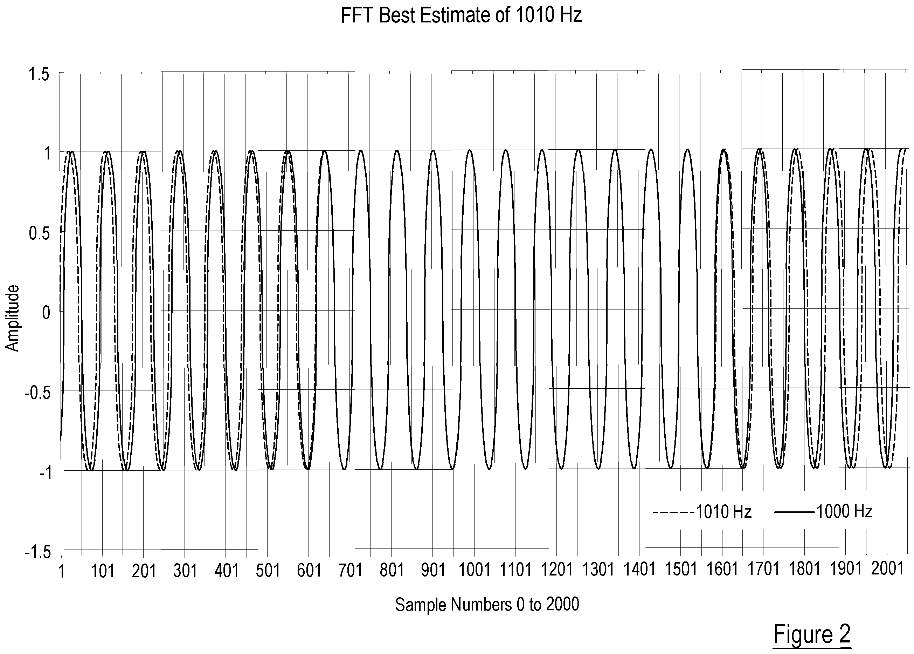

One can see from Fig 2 of the accompanying drawings that the FFT is representing the 1010 Hz wave with a 1000 Hz wave. It can immediately be seen that a phase shift develops over the samples which represents the energy which is lost mostly to adjacent buckets. The amplitude reported by the FFT is therefore not correct. one can also see that windowing the error at the edges reduces the error making a consistent and predictable drop of 2.4 dB for a frequency between 2 buckets.

One can also see that it's a simple matter when you see the above phase error that it is quite easy to shift the frequency to find the real frequency.

This can be done by progressively increasing or decreasing the frequency until the RMS total error is minimum. This is when your chosen frequency is the closes one to the actual frequency.

Once you know the frequency it is a simple matter to calculate the amplitude which can be done from a knowledge of the bucket frequency response. Luckily all buckets produce exactly the same frequency response.

There are many solutions to this problem - one using the FFT data alone.

As described above, if a sound event is on the cusp between two buckets some of the energy will fall in the adjacent bucket. If the buckets report the same amplitude then the actual sine wave must be exactly between the two buckets. Since the frequency response is predictable, knowing the amplitude of two adjacent buckets allows the amplitude and frequency of the actual signal to be interpolated. This works in all cases of a single frequency.

One could argue that there are two frequencies and in fact this does happen, but in this case they would have to be within 20 Hz of each other in a close-coupled brake system. It would have to be two very high Q resonant circuits to not couple with each other in the confined space of one brake assembly which would indicate a level of resonance which would render the brakes completely unacceptable by any noise measure. So we can safely assume that there is only one resonance in any one bucket and its neighbours.

Two examples are described below which address the problems with conventional NVH testing systems and methods.

One is very accurate and will separate closely spaced frequencies but requires the noise event to be recorded in real time. The other gives an accuracy of ±1 Hz and ±0.2 dB which is possibly good enough an improvement to the SAE J 2125 and the specification could possibly be limited to this accuracy to allow older NVH equipment to be upgraded without hardware changes of having to record the Sound event to high accuracy.

There are two possible methods of establishing the frequency and amplitude of the 2000-point sample to a much higher accuracy. An FFT is preferably used to flag up noise events and to reduce the data processing requirement. However, in some examples, not forming part of the invention, the first processing step is omitted. In practice, there are millions of 40-millisecond samples (if you use several transducers). Most of these recordings are of no interest as even the inaccurate FFT did not report any significant event for most of them. In a typical test, there could be less than 200 examples of 40-millisecond sound bites of any interest at all. So, the inaccurate FFT is used to screen out the low noise events, allowing the few high noise events to be calculated more accurately.

The idea is to recalculate just the interesting data samples to higher accuracy than can be achieved with FFT. This involves reprocessing the 2000 points (time or frequency or both) in a different way. This may mean that noise event must be recorded for later revaluation. This is not a problem for modern computers.

A vehicle noise, vibration and harshness (NVH) testing method according to the invention comprises sampling the frequency and amplitude of a noise at discrete intervals over a plurality of time periods to produce time domain sampled data. The method then comprises performing a first processing operation which comprises converting the time domain sampled data into a frequency domain signal and comparing the frequency domain signal with a plurality of discrete frequency domain buckets which each correspond to a predetermined frequency range. The method further comprises comparing the amplitude of the frequency domain signal across the frequency ranges of two or more of the buckets and selecting a bucket in which the amplitude of the frequency domain signal is greater than the amplitude of the frequency domain signal of at least one of the other buckets, wherein the frequency domain signal of the selected bucket represents a noise event. The method further comprises performing a second processing operation on the frequency domain signal of the selected bucket to measure the amplitude and frequency of the noise event in order to evaluate the noise, vibration and harshness of the noise event. The first and second processing operations are described as Methods 1 and 2 below.

### Method 1: Time Domain Analysis (Requires sound bites to be recorded)

Once the FFT has identified a 2000-point event which needs more careful analysis it can pass the 2000 points to another type of algorithm. This can be a more time-consuming algorithm as there is only a small number of these events.

The FFT has reported the frequency to accuracy of ±11Hz and the amplitude to a 2.5dB accuracy. A sine wave of this reported frequency and amplitude can be digitally constructed and subtracted from the original 2000-point sample.

The resulting 2000-points can, again, be measured usually in RMS amplitude but not necessarily. A hill climbing technique can be used to model the frequency amplitude of the subtracted value over all steps to find the combination of frequency, phase and amplitude which reduces the 2000-points to its lowest error value.

At this point you have produced the best match at the correct frequency and the correct amplitude and the correct phase. This new frequency and amplitude represents a more accurate measurement than the simple FFT bucket.

To speed up the calculation, the real and imaginary samples from the 2000-point FFT can be used to approximate the phase of the subtracting sine wave to get on target quicker but this is not essential.

This results in a frequency accuracy of better than 1Hz and an amplitude accuracy of better than 0.05dB. There are other algorithms which will establish the underlying best fit sine wave. These methods can be adapted to use the time domain data with or without the windowing required by the SAE procedure.

In the method according to the invention, the vehicle noise, vibration and harshness (NVH) testing method comprises providing a frequency domain signal in a frequency domain bucket corresponding to a predetermined frequency range and converting the frequency domain signal into a time domain signal. The method further comprises subtracting the converted time domain signal from stored time domain sampled data corresponding to the time domain signal, determining an error value representing the difference between the time domain signal and the stored time domain sampled data and determining a frequency, phase and amplitude modification to the time domain signal to reduce the error value. The method further comprises using the frequency, phase and amplitude modification to offset the error value in the amplitude and frequency of the noise event to more accurately evaluate the noise, vibration and harshness of the noise event. The method is preferably a one-pass method but in other embodiments the method is a two-pass method comprising a first processing step which comprises performing an FFT operation.

### Method 2: (Does not requires sound bites to be recorded)

This method, not forming part of the present invention, does not require the data to be recorded in its time domain format. The result is slightly less accurate than Method 1 but relies solely on the FFT data.

This method exploits the frequency response of the buckets themselves. When an event is found at the middle of a bucket it is mostly reported in the one bucket. There is some spill over to adjacent buckets but this could be as low as 30dB. When a single value falls between two buckets it is shown with near equal amplitude in the adjacent bucket. Since it is very unlikely that two very similar frequencies would be produced by two unrelated events in one brake at the same moment in time. In fact, this is particularly unlikely as because the frequencies are so close and are mechanically coupled to ensure they resonate in a coupled manner and produce the same frequency. It can safely be assumed that if two adjacent buckets report the same amplitude it is the same event siting between the two buckets.

Hence if two buckets give the same or similar amplitude responses from a noticeable event, the event frequency lies between the two buckets. The frequency response is very predicable so if say one is 1dB less than the other then the frequency will be a few Hertz nearer to the higher bucket value. A table can easily be produced or a best fit polynomial can be developed for every different dB ratio between adjacent buckets from 0 to say 20dBs which maps the ratio in dBs with the frequency offset from the centre of the highest reading bucket.

Once the frequency is known accurately it is a very simple matter to consult the frequency response curve of the bucket to calculate the amplitude. Conversely it is quite possible to develop an amplitude transfer curve from the dBs and work out amplitude directly.

This process in a practical implementation will get the frequency to an accuracy of ~±1 Hz and the amplitude to ±0.1dB. Other methods can be used to produce the same or similar results from the FFT data

In this second method the vehicle noise, vibration and harshness (NVH) testing method comprises providing a frequency domain signal in a frequency domain bucket corresponding to a predetermined frequency range and calculating the frequency response of the frequency domain bucket. The method further comprises using the frequency response of the frequency domain bucket to calculate the amplitude of a noise event based on the frequency of the noise event to more accurately evaluate the noise, vibration and harshness of the noise event. The method is preferably a one-pass method but in other embodiments the method is a two-pass method comprising a first processing step which comprises performing an FFT operation.

A further disclosed method comprises spinning a vehicle wheel, using a microphone and a noise sampling unit to sample the frequency and amplitude of noise emanating from the spinning wheel prior to performing the methods described herein for NVH testing, where the methods comprising Method 2 above are examples not forming part of the claimed invention.

A further aspect of the disclosure concerns a vehicle noise, vibration and harshness (NVH) testing system comprises a microphone and a noise sampling unit coupled to the microphone, the noise sampling unit being configured to sample the frequency and amplitude of a noise at discrete intervals over a plurality of time periods to produce time domain sampled data. The system further comprises a processing unit coupled for communication with the noise sampling unit, the processing unit being configured to perform processing steps of the methods described herein, where the methods comprising Method 2 above are examples not forming part of the claimed invention.

### Technical improvements

The SAE J2521 Squeal Matrix Dynamometer Test procedure has been in use for over a decade during which time anomalies have been found in the calibration procedure and data analysis. For example, if you use a 1KHz tone to calibrate, a difference of up 2.5dBs in calibration level can be noted from different test generators.

This is because early calibration instruments had accrued amplitude but could be up to 11Hz in error from 1KHz.

This makes very little difference to the calibration of a conventional noise meter but due the same procedure requiring a FFT before calibrating with 22Hz bucket size, a 11Hz frequency difference can place one tone in the centre of the bucket and the other at the edge.

Each bucket has a non-flat frequency response and the extreme of one bucket is 2dBs down from the centre.

Similarly, any brake NVH event does not place itself directly in the centre of the bucket so it can also be out by up to 2dBs. These errors are adaptive and the total uncertainty is 4dBs by this cause alone.

The SAE test procedure is reasonably specific about the length of the sound bites which must be separately analysed and it has been a common misunderstanding of the mathematics involved in an FFT that this is unavoidable.

In fact, in commonly used NVH test systems the lower set sampling rate and the number of samples work together to give a limit on frequency and amplitude accuracy obtainable with the small sample size specified in SAE.

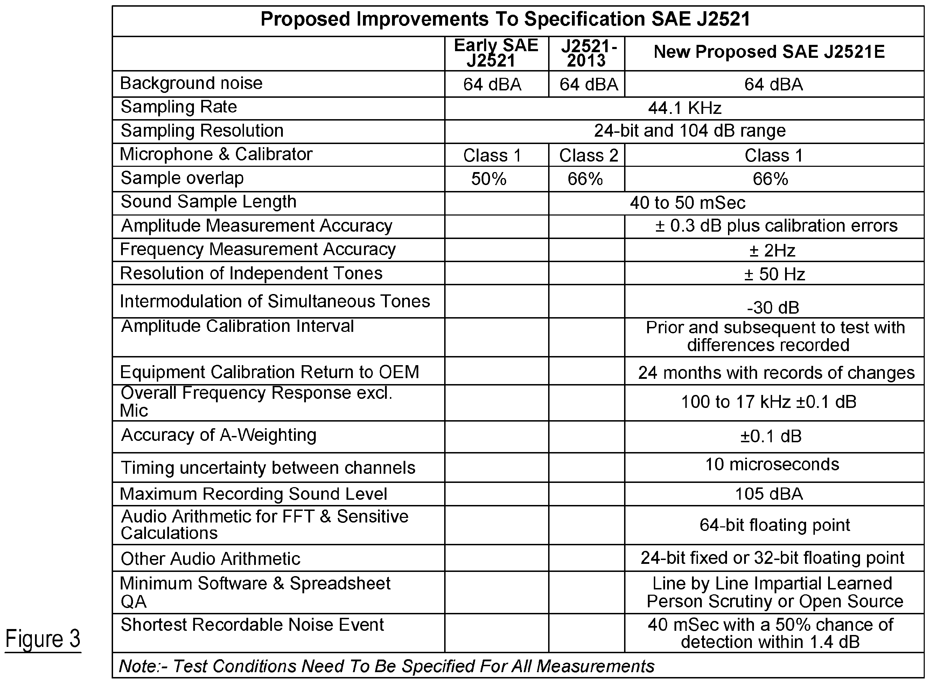

Embodiments of the invention allow the frequency to be established within 1Hz and amplitude within 0.1dB excluding calibration and electronic measurement errors. Figure 3 of the accompanying drawings shows the improvements in the measurement accuracy of some embodiments compared with conventional techniques.

Once the true frequency is known, the deviation from the centre of the bucket can be calculated and the amplitude corrected for both the calibration signal and the NVH noise.

Similarly, there are algorithms that will calculate the amplitude more precisely within 0.1dB and from this the frequency can be calculated within 1Hz.

The significance of this improvement in measurement accuracy is particularly important in an R&D environment where you may have twenty or more parameters you can adjust to improve noise performance. Each improvement in itself would only be slight but if the right combination of improvements can be established then a very useful improvement can result.

If you have a system which can confuse a 11Hz shift in frequency with a 2dB change in noise level this makes improvement virtually impossible as the 11Hz shift would have precisely no effect on the perceived nuisance noise but a reduction of 2dBs coupled with a few more simple improvements could completely remove the problem.

A system which can confuse an unnoticeable change in the annoyance frequency with a noticeable change in amplitude is of little use in R&D. Considering that the machines cost over £1,000,000, it's a huge amount of money to spent on a machine which delivers inadequate accuracy results.

This patent improves the accuracy of these complex and expensive machine so significantly that the usefulness of the machines is greatly improved for both R&D and an individual company's quality targets.

The machines to date have proved insufficiently accurate to allow a legislative to be established from this test method. This improvement may in itself be sufficient that machine accuracy is now high enough for legislative limits to be placed on vehicle noise using this evaluation method.

When used in this specification and claims, the terms "comprises" and "comprising" and variations thereof mean that the specified features, steps or integers are included. The terms are not to be interpreted to exclude the presence of other features, steps or components.

It should be noted and understood that there can be improvements and modifications made to the present invention described above without departing from the scope of the invention as set forth in the accompanying claims.

## Claims

1. A vehicle noise, vibration and harshness, NHV, testing method, the method comprising:
sampling the frequency and amplitude of a noise at discrete intervals over a plurality of time periods to produce time domain sampled data;
storing a copy of the time domain sampled data;
performing a first processing operation which comprises:
converting the time domain sampled data into a frequency domain signal; and
comparing the frequency domain signal with a plurality of discrete frequency domain buckets, each bucket of the plurality of buckets corresponding to a respective predetermined frequency range of the frequency domain signal, wherein the comparing comprises comparing the amplitude of the frequency domain signal across the frequency ranges of two or more of the buckets; and
selecting a bucket in which the amplitude of the frequency domain signal is greater than the amplitude of the frequency domain signal of at least one of the other buckets, wherein the frequency domain signal of the selected bucket represents a noise event; and
performing a second processing operation on the frequency domain signal of the selected bucket to measure the amplitude and frequency of the noise event in order to evaluate the noise, vibration and harshness of the noise event, the method being **characterised in that** the second processing operation comprises:
converting the frequency domain signal of the selected bucket into a time domain signal;
subtracting the time domain signal from the stored copy of the time domain sampled data;
determining an error value representing the difference between the time domain signal and the stored copy of the time domain sampled data;
determining a frequency, phase and amplitude modification to the time domain signal to reduce the error value; and
using the frequency, phase and amplitude modification providing the lowest error value as the amplitude and frequency of the noise event to more accurately evaluate the noise, vibration and harshness of the noise event.

2. The method of claim 1, wherein the first processing operation comprises a fast Fourier transform operation to convert the time domain sampled data into the frequency domain signal.

3. The method of claim 1 or claim 2, wherein each time period is substantially 40ms.

4. The method of any one of the preceding claims, wherein the method comprises sampling the noise at a rate of substantially 44.1kHz.

5. The method of any one of the preceding claims, wherein the predetermined frequency range of each bucket is substantially 22Hz.

6. A tangible computer readable medium storing instructions which, when executed by a processor, cause the processor to perform the method of any one of claims 1-5.

7. A vehicle noise, vibration and harshness, NHV, testing method, the method comprising:
spinning a vehicle wheel; and
using a microphone and a noise sampling unit to sample the frequency and amplitude of noise emanating from the spinning wheel; and
performing the method of any one of claims 1-5 to measure the amplitude and frequency of a noise event in order to evaluate the noise, vibration and harshness of the noise emanating from the spinning wheel.

8. A vehicle noise, vibration and harshness, NHV, testing system, the system comprising:
a microphone;
a noise sampling unit coupled to the microphone, the noise sampling unit being configured to sample the frequency and amplitude of a noise at discrete intervals over a plurality of time periods to produce time domain sampled data;
a processing unit coupled for communication with the noise sampling unit, the processing unit being configured to:
store a copy of the time domain sampled data;
perform a first processing operation which comprises:
converting the time domain sampled data into a frequency domain signal; and
comparing the frequency domain signal with a plurality of discrete frequency domain buckets, each bucket of the plurality of buckets corresponding to a respective predetermined frequency range of the frequency domain signal, wherein the comparing comprises:
comparing the amplitude of the frequency domain signal across the frequency ranges of two or more of the buckets; and
selecting a bucket in which the amplitude of the frequency domain signal is greater than the amplitude of the frequency domain signal of at least one of the other buckets, wherein the frequency domain signal of the selected bucket represents a noise event;
perform a second processing operation on the frequency domain signal of the selected bucket to measure the amplitude and frequency of the noise event, **characterised in that** the second operation comprises
converting the frequency domain signal of the selected bucket into a time domain signal;
subtracting the time domain signal from a stored copy of the time domain sampled data;
determining an error value representing the difference between the time domain signal and the stored time domain sampled data;
determining a frequency, phase and amplitude modification to the time domain signal to reduce the error value; and
using the frequency, phase and amplitude modification providing the lowest error value as the amplitude and frequency of the noise event to more accurately evaluate the noise, vibration and harshness of the noise event, wherein the system further comprises:
an output unit which is configured to output data indicative of the measured amplitude and frequency of the noise event such that a user can evaluate the noise, vibration and harshness of the noise event.

9. The system of claim 8, wherein the first processing operation comprises a fast Fourier transform operation to convert the time domain sampled data into the frequency domain signal.

10. The system of claim 8 or claim 9, wherein the processing unit is configured, when performing the second processing operation, to:
calculate the frequency response of the selected bucket; and
use the frequency response of the selected bucket to calculate the amplitude of the noise event based on the frequency of the noise event.

11. The system of claim 10, wherein the processing unit is configured to:
compare the amplitude of the frequency domain signal in two adjacent buckets and, if the amplitude of the noise event in the two adjacent buckets is substantially equal, identifying that the frequency domain signal corresponds to a noise event which extends across the two adjacent buckets.

## Patentansprüche

1. Verfahren zur Geräusch-, Vibrations- und Rauheits-, NHV-, Prüfung eines Fahrzeugs, wobei das Verfahren umfasst:
Abtasten der Frequenz und Amplitude eines Geräuschs in diskreten Intervallen über eine Vielzahl von Zeiträumen, um Zeitdomänenabtastdaten zu erzeugen;
Speichern einer Kopie der Zeitdomänenabtastdaten;
Durchführen eines ersten Verarbeitungsvorgangs, der umfasst:
Umwandeln der Zeitdomänenabtastdaten in ein Frequenzdomänensignal; und
Vergleichen des Frequenzdomänensignals mit einer Vielzahl von diskreten Frequenzdomänen-Buckets, wobei jeder Bucket der Vielzahl von Buckets einem jeweiligen vorbestimmten Frequenzbereich des Frequenzdomänensignals entspricht, wobei das Vergleichen umfasst: Vergleichen der Amplitude des Frequenzdomänensignals über die Frequenzbereiche von zwei oder mehr der Buckets; und
Auswählen eines Buckets, bei dem die Amplitude des Frequenzdomänensignals größer ist als die Amplitude des Frequenzdomänensignals von mindestens einem der anderen Buckets, wobei das Frequenzdomänensignal des ausgewählten Buckets ein Geräuschereignis darstellt; und
Durchführen eines zweiten Verarbeitungsvorgangs an dem Frequenzdomänensignal des ausgewählten Buckets, zum Messen der Amplitude und Frequenz des Geräuschereignisses, um das Geräusch, die Vibration und die Rauheit des Geräuschereignisses auszuwerten, wobei das Verfahren **dadurch gekennzeichnet ist, dass** der zweite Verarbeitungsvorgang umfasst:
Umwandeln des Frequenzdomänensignals des ausgewählten Buckets in ein Zeitdomänensignal;
Subtrahieren des Zeitdomänensignals von der gespeicherten Kopie der Zeitdomänenabtastdaten;
Bestimmen eines Fehlerwerts, der die Differenz zwischen dem Zeitdomänensignal und der gespeicherten Kopie der Zeitdomänenabtastdaten darstellt;
Bestimmen einer Frequenz-, Phasen- und Amplitudenmodifikation des Zeitdomänensignals, um den Fehlerwert zu reduzieren; und
Verwenden der Frequenz-, Phasen- und Amplitudenmodifikation, die den niedrigsten Fehlerwert liefert, als die Amplitude und Frequenz des Geräuschereignisses, um das Geräusch, die Vibration und die Rauheit des Geräuschereignisses genauer auszuwerten.

2. Verfahren nach Anspruch 1, wobei der erste Verarbeitungsvorgang einen schnellen Fourier-Transformationsvorgang zum Umwandeln der Zeitdomänenabtastdaten in das Frequenzdomänensignal umfasst.

3. Verfahren nach Anspruch 1 oder Anspruch 2, wobei jeder Zeitraum im Wesentlichen 40 ms beträgt.

4. Verfahren nach einem der vorhergehenden Ansprüche, wobei das Verfahren das Abtasten des Geräuschs mit einer Rate von im Wesentlichen 44,1 kHz umfasst.

5. Verfahren nach einem der vorangehenden Ansprüche, wobei der vorbestimmte Frequenzbereich jedes Buckets im Wesentlichen 22 Hz beträgt.

6. Tangierbares computerlesbares Medium, das Anweisungen speichert, die bei Ausführung durch einen Prozessor bewirken, dass der Prozessor das Verfahren nach einem der Ansprüche 1-5 durchführt.

7. Verfahren zur Geräusch-, Vibrations- und Rauheits-, NHV-, Prüfung eines Fahrzeugs, wobei das Verfahren umfasst:
Drehen eines Fahrzeugrads; und
Verwenden eines Mikrofons und einer Geräuschabtasteinheit zum Abtasten der Frequenz und Amplitude des von dem sich drehenden Rad ausgehenden Geräuschs; und
Durchführen des Verfahrens nach einem der Ansprüche 1-5, zum Messen der Amplitude und Frequenz eines Geräuschereignisses, um das Geräusch, die Vibration und die Rauheit des von dem sich drehenden Rad ausgehenden Geräuschs auszuwerten.

8. System zur Geräusch-, Vibrations- und Rauheits-, NHV-, Prüfung eines Fahrzeugs, wobei das Verfahren umfasst:
ein Mikrofon;
eine Geräuschabtasteinheit, die mit dem Mikrofon gekoppelt ist, wobei die Geräuschabtasteinheit dafür konfiguriert ist, die Frequenz und Amplitude eines Geräuschs in diskreten Intervallen über eine Vielzahl von Zeitperioden abzutasten, um Zeitdomänenabtastdaten zu erzeugen;
eine Verarbeitungseinheit, die zur Kommunikation mit der Geräuschabtasteinheit gekoppelt ist, wobei die Verarbeitungseinheit konfiguriert ist zum:
Speichern einer Kopie der Zeitdomänenabtastdaten;
Durchführen eines ersten Verarbeitungsvorgangs, der umfasst:
Umwandeln der Zeitdomänenabtastdaten in ein Frequenzdomänensignal; und
Vergleichen des Frequenzdomänensignals mit einer Vielzahl von diskreten Frequenzdomänen-Buckets, wobei jeder Bucket der Vielzahl von Buckets einem jeweiligen vorbestimmten Frequenzbereich des Frequenzdomänensignals entspricht, wobei das Vergleichen umfasst:
Vergleichen der Amplitude des Frequenzdomänensignals über die Frequenzbereiche von zwei oder mehr der Buckets; und
Auswählen eines Buckets, bei dem die Amplitude des Frequenzdomänensignals größer ist als die Amplitude des Frequenzdomänensignals von mindestens einem der anderen Buckets, wobei das Frequenzdomänensignal des ausgewählten Buckets ein Geräuschereignis darstellt;
Durchführen eines zweiten Verarbeitungsvorgangs an dem Frequenzdomänensignal des ausgewählten Buckets, um die Amplitude und Frequenz des Geräuscheignisses zu messen, **dadurch gekennzeichnet, dass** der zweite Vorgang umfasst
Umwandeln des Frequenzdomänensignals des ausgewählten Buckets in ein Zeitdomänensignal;
Subtrahieren des Zeitdomänensignals von einer gespeicherten Kopie der Zeitdomänenabtastdaten;
Bestimmen eines Fehlerwerts, der die Differenz zwischen dem Zeitdomänensignal und den gespeicherten Zeitdomänenabtastdaten darstellt;
Bestimmen einer Frequenz-, Phasen- und Amplitudenmodifikation des Zeitdomänensignals, um den Fehlerwert zu reduzieren; und
Verwenden der Frequenz-, Phasen- und Amplitudenmodifikation, die den niedrigsten Fehlerwert liefert, als die Amplitude und Frequenz des Geräuschereignisses, um das Geräusch, die Vibration und die Rauheit des Geräuschereignisses genauer auszuwerten, wobei das System ferner umfasst:
eine Ausgabeeinheit, die dafür konfiguriert ist, Daten auszugeben, die für die gemessene Amplitude und Frequenz des Geräuschereignisses indikativ sind, so dass ein Benutzer das Geräusch, die Vibration und die Rauheit des Geräuschereignisses auswerten kann.

9. System nach Anspruch 8, wobei der erste Verarbeitungsvorgang einen schnellen Fourier-Transformationsvorgang zum Umwandeln der Zeitdomänenabtastdaten in das Frequenzdomänensignal umfasst.

10. System nach Anspruch 8 oder Anspruch 9, wobei die Verarbeitungseinheit konfiguriert ist, beim Durchführen des zweiten Verarbeitungsvorgangs, zum:
Berechnen des Frequenzgangs des ausgewählten Buckets; und
Verwenden des Frequenzgangs des ausgewählten Buckets, um die Amplitude des Geräuschereignisses auf Basis der Frequenz des Geräuschereignisses zu berechnen.

11. System nach Anspruch 10, wobei die Verarbeitungseinheit konfiguriert ist zum:
Vergleichen der Amplitude des Frequenzdomänensignals in zwei benachbarten Buckets und, wenn die Amplitude des Geräuschereignisses in den zwei benachbarten Buckets im Wesentlichen gleich ist, Identifizieren, dass das Frequenzdomänensignal einem Geräuschereignis entspricht, das sich über die zwei benachbarten Buckets erstreckt.

## Revendications

1. Un procédé d'essai de bruit, de vibrations et de robustesse, NVH, de véhicule, le procédé consistant à :
échantillonner la fréquence et l'amplitude d'un bruit à des intervalles discrets sur une pluralité de périodes de temps pour produire des données échantillonnées dans le domaine temporel ;
mémoriser une copie des données échantillonnées dans le domaine temporel ;
réaliser une première opération de traitement qui consiste à :
convertir les données échantillonnées dans le domaine temporel en un signal de domaine de fréquence ; et
comparer le signal de domaine de fréquence à une pluralité de compartiments de domaine de fréquence discrets, chaque compartiment de la pluralité de compartiments correspondant respectivement à une plage de fréquences prédéfinie du signal de domaine de fréquence, dans lequel la comparaison consiste à comparer l'amplitude du signal de domaine de fréquence à toutes les plages de fréquences de deux des compartiments ou plus ; et
sélectionner un compartiment dans lequel l'amplitude du signal de domaine de fréquence est supérieure à l'amplitude du signal de domaine de fréquence d'au moins un des autres compartiments, dans lequel le signal de domaine de fréquence du compartiment sélectionné représente un événement de bruit ; et
réaliser une deuxième opération de traitement sur le signal de domaine de fréquence du compartiment sélectionné pour mesurer l'amplitude et la fréquence de l'événement de bruit afin d'évaluer le bruit, les vibrations et la robustesse de l'événement de bruit, le procédé étant **caractérisé en ce que** la deuxième opération de traitement consiste à :
convertir le signal de domaine de fréquence du compartiment sélectionné en un signal de domaine temporel ;
soustraire le signal de domaine temporel de la copie mémorisée des données échantillonnées dans le domaine temporel ;
définir une valeur d'erreur représentant la différence entre le signal de domaine temporel et la copie mémorisée des données échantillonnées dans le domaine temporel ;
définir une modification de l'amplitude, la phase et la fréquence du signal de domaine temporel pour réduire la valeur d'erreur ; et
utiliser la modification de l'amplitude, la phase et la fréquence fournissant la valeur d'erreur la plus basse de l'amplitude et de la fréquence de l'événement de bruit afin d'évaluer plus précisément le bruit, les vibrations et la robustesse de l'événement de bruit.

2. Le procédé selon la revendication 1, dans lequel la première opération de traitement comprend une opération de transformée de Fourier rapide pour convertir les données échantillonnées dans le domaine temporel en signal de domaine de fréquence.

3. Le procédé selon la revendication 1 ou la revendication 2, dans lequel chaque période de temps est sensiblement 40 ms.

4. Le procédé selon l'une quelconque des revendications précédentes, dans lequel le procédé consiste à échantillonner le bruit à une fréquence de sensiblement 44,1 kHz.

5. Le procédé selon l'une quelconque des revendications précédentes, dans lequel la plage de fréquences prédéfinie de chaque compartiment est sensiblement 22 Hz.

6. Un support lisible par ordinateur tangible mémorisant des instructions qui, lorsqu'elles sont exécutées par un processeur, amènent le processeur à réaliser le procédé selon l'une quelconque des revendications 1-5.

7. Un procédé d'essai de bruit, de vibrations et de robustesse, NVH, de véhicule, le procédé consistant à :
faire tourner une roue de véhicule ; et
utiliser un microphone et une unité d'échantillonnage de bruit pour échantillonner la fréquence et l'amplitude du bruit émanant de la roue qui tourne ; et
réaliser le procédé selon l'une quelconque des revendications 1-5 pour mesurer l'amplitude et la fréquence de l'événement de bruit afin d'évaluer le bruit, les vibrations et la robustesse émanant de la roue qui tourne.

8. Un système d'essai de bruit, de vibrations et de robustesse, NVH, de véhicule, le système comprenant :
un microphone ;
une unité d'échantillonnage de bruit couplée au microphone, l'unité d'échantillonnage de bruit étant configurée pour échantillonner la fréquence et l'amplitude d'un bruit à des intervalles discrets sur une pluralité de périodes de temps pour produire des données échantillonnées dans le domaine temporel ;
une unité de traitement couplée aux fins de communication avec l'unité d'échantillonnage de bruit, l'unité de traitement étant configurée pour :
mémoriser une copie des données échantillonnées dans le domaine temporel ;
réaliser une première opération de traitement qui consiste à :
convertir les données échantillonnées dans le domaine temporel en un signal de domaine de fréquence ; et
comparer le signal de domaine de fréquence à une pluralité de compartiments de domaine de fréquence discrets, chaque compartiment de la pluralité de compartiments correspondant respectivement à une plage de fréquences prédéfinie du signal de domaine de fréquence, dans lequel la comparaison consiste à :
comparer l'amplitude du signal de domaine de fréquence à toutes les plages de fréquences de deux des compartiments ou plus ; et
sélectionner un compartiment dans lequel l'amplitude du signal de domaine de fréquence est supérieure à l'amplitude du signal de domaine de fréquence d'au moins un des autres compartiments, dans lequel le signal de domaine de fréquence du compartiment sélectionné représente un événement de bruit ;
réaliser une deuxième opération de traitement sur le signal de domaine de fréquence du compartiment sélectionné pour mesurer l'amplitude et la fréquence de l'événement de bruit, **caractérisé en ce que** la deuxième opération consiste à :
convertir le signal de domaine de fréquence du compartiment sélectionné en un signal de domaine temporel ;
soustraire le signal de domaine temporel d'une copie mémorisée des données échantillonnées dans le domaine temporel ;
définir une valeur d'erreur représentant la différence entre le signal de domaine temporel et les données échantillonnées mémorisée dans le domaine temporel ;
définir une modification de l'amplitude, la phase et la fréquence du signal de domaine temporel pour réduire la valeur d'erreur ; et
utiliser la modification de l'amplitude, la phase et la fréquence fournissant la valeur d'erreur la plus basse de l'amplitude et de la fréquence de l'événement de bruit afin d'évaluer plus précisément le bruit, les vibrations et la robustesse de l'événement de bruit, dans lequel le système comprend en outre :
une unité de sortie qui est configurée pour sortir des données indiquant l'amplitude et la fréquence mesurées de l'événement de bruit de sorte qu'un utilisateur peut évaluer le bruit, les vibrations et la robustesse de l'événement de bruit.

9. Le système selon la revendication 8, dans lequel la première opération de traitement comprend une opération de transformée de Fourier rapide pour convertir les données échantillonnées dans le domaine temporel en signal de domaine de fréquence.

10. Le système selon la revendication 8 ou la revendication 9, dans lequel l'unité de traitement est configurée, lors de la réalisation de la deuxième opération de traitement, pour :
calculer la réponse en fréquence du compartiment sélectionné ; et
utiliser la réponse en fréquence du compartiment sélectionné pour calculer l'amplitude de l'événement de bruit sur la base de la fréquence de l'événement de bruit.

11. Le système selon la revendication 10, dans lequel l'unité de traitement est configurée pour :
comparer l'amplitude du signal de domaine de fréquence dans deux compartiments adjacents et, si l'amplitude de l'événement de bruit dans les deux compartiments adjacents est sensiblement égale, identifier que le signal de domaine de fréquence correspond à un événement de bruit qui s'étend sur les deux compartiments adjacents.
